# EUROPEAN PATENT APPLICATION

(11) **EP 4 848 765 A1**
(43) Date of publication of application: **02.12.2026**
(21) Application number: 25751097.4
(22) Date of filing: 14.01.2025
(51) Int. Cl.: H04W 4/80

(54) **COMMUNICATION METHOD, APPARATUS, AND SYSTEM**

(30) Priority: 08.02.2024 CN 202410178293
(71) Applicant: HUAWEI TECHNOLOGIES CO., LTD., Shenzhen, Guangdong 518129 (CN)
(72) Inventor: SHEN, Zhongyi, Shenzhen, Guangdong 518129 (CN); LI, Chenwan, Shenzhen, Guangdong 518129 (CN); SENG, Shuming, Shenzhen, Guangdong 518129 (CN); SHI, Yulong, Shenzhen, Guangdong 518129 (CN); WANG, Rui, Shenzhen, Guangdong 518129 (CN)
(74) Representative: Huawei European IPR
(86) International application number: PCT/CN2025/072338
(87) International publication number: WO 2025/167495

(57) **Abstract**

This application relates to the field of communication technologies, and discloses a communication method, apparatus, and system. The method includes: A first communication apparatus sends first identification information of the first communication apparatus, where a value of a counter of the first communication apparatus is 0; receives a first message, where the first message includes first information and second information, the first information indicates that the first identification information of the first communication apparatus has been correctly received, the second information is used to subtract 1 from values of counters of one or more communication apparatuses, and the values of the counters of the one or more communication apparatuses are greater than 0; and sends a second message, where the second message includes second identification information of the first communication apparatus. According to the foregoing method, because the first message includes the first information and the second information, uplink-downlink conversion time is reduced, and efficiency of inventory is improved.

## Description

### CROSS-REFERENCE TO RELATED APPLICATIONS

This application claims priority to Chinese Patent Application No. 202410178293.6, filed with the China National Intellectual Property Administration on February 8, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In the development of communication, to reduce power consumption of terminal devices, it has been proposed to introduce a radio frequency identification (radio frequency identification, RFID) technology into communication networks. In the RFID technology, a tag converts a radio frequency signal emitted by a reader into energy, and uses the energy to drive itself to operate, so as to complete data transmission by responding to the radio frequency signal. The RFID technology has a potential for large-scale deployment and application. For example, in logistics and warehousing scenarios, tags can be used for inventory and tracking of goods. For another example, in industrial manufacturing scenarios, tags can be used for environment and device status monitoring.

However, how to improve efficiency of inventory using tags still requires further research.

### SUMMARY

This application provides a communication method, apparatus, and system, to improve efficiency of inventory using tags.

According to a first aspect, an embodiment of this application provides a communication method. The method may be applied to a first communication apparatus, and the first communication apparatus may be a first tag or a component (for example, a chip or a circuit) in the first tag. For example, in the method, the first communication apparatus sends first identification information of the first communication apparatus, where a value of a counter of the first communication apparatus is 0; receives a first message, where the first message includes first information and second information, the first information indicates that the first identification information of the first communication apparatus has been correctly received, the second information is used to subtract 1 from values of counters of one or more communication apparatuses, and the values of the counters of the one or more communication apparatuses are greater than 0; and sends a second message, where the second message includes second identification information of the first communication apparatus.

According to the foregoing method, because the first message includes the first information and the second information, uplink-downlink conversion time is reduced, and efficiency of inventory is improved. Optionally, it is further convenient to reduce a quantity of times of sending a preamble and a postamble, and further improve the efficiency of inventory.

In a possible design, the method further includes: determining, based on the first message, to delay sending the second message; and determining start time of the second message based on a first delay offset.

In this way, the second message and a third message (the third message includes first identification information of a second tag) sent by another tag (for example, the second tag) can be prevented from overlapping in time domain by delaying sending the second message, so that a reader correctly receives the second message.

In a possible design, determining the start time of the second message based on the first delay offset includes: determining the start time of the second message based on end time of the first message, first duration, and the first delay offset, where the first duration is predefined or preconfigured.

In a possible design, determining, based on the first message, to delay sending the second message includes: if the first information in the first message is after the second information in time domain, determining to delay sending the second message.

In this way, because the second message is a message sent in response to the first information, if the first information is located after the second information in time domain, sending of the second message may be correspondingly delayed.

In a possible design, the first delay offset is determined based on at least one of: a length of the first identification information, a length of the preamble, a length of the postamble, a configured code rate, a configured coverage level, and a configured link rate.

In a possible design, the method further includes: determining start time of the second message based on end time of the first message and first duration, where the first duration is predefined or preconfigured.

In a possible design, the method further includes: determining that the first information in the first message is located before the second information in time domain.

According to a second aspect, an embodiment of this application provides a communication method. The method may be applied to a second communication apparatus, and the second communication apparatus may be a second tag or a component (for example, a chip or a circuit) in the second tag. For example, in the method, the second communication apparatus receives a first message, where the first message includes first information and second information, the first information indicates that first identification information of a first communication apparatus has been correctly received, the second information is used to subtract 1 from values of counters of one or more communication apparatuses, the values of the counters of the one or more communication apparatuses are greater than 0, and the one or more communication apparatuses include the second communication apparatus; and if a value of a counter of the second communication apparatus is decreased to 0, sends a third message, where the third message includes first identification information of the second communication apparatus.

According to the foregoing method, because the first message includes the first information and the second information, uplink-downlink conversion time is reduced, and efficiency of inventory is improved. Optionally, it is further convenient to reduce a quantity of times of sending a preamble and a postamble, and further improve the efficiency of inventory.

In a possible design, the method further includes: determining, based on the first message, to delay sending the third message; and determining start time of the third message based on a second delay offset.

In a possible design, determining the start time of the third message based on the second delay offset includes: determining the start time of the third message based on end time of the first message, first duration, and the second delay offset, where the first duration is predefined or preconfigured.

In a possible design, determining, based on the first message, to delay sending the second message includes: if the first information in the first message is located before the second information in time domain, determining to delay sending the third message.

In a possible design, the second delay offset is determined based on at least one of: a length of second identification information of the first communication apparatus, a length of the preamble, a length of the postamble, a configured code rate, a configured coverage level, and a configured link rate.

In a possible design, the method further includes: determining start time of the third message based on end time of the first message and first duration, where the first duration is predefined or preconfigured.

In a possible design, the method further includes: determining that the first information in the first message is located after the second information in time domain.

According to a third aspect, an embodiment of this application provides a communication method. The method may be applied to a third communication apparatus, and the third communication apparatus may be a reader or a component (for example, a chip or a circuit) in the reader. For example, in the method, the third communication apparatus receives first identification information of a first communication apparatus, where a value of a counter of the first communication apparatus is 0; sends a first message, where the first message includes first information and second information, the first information indicates that the first identification information of the first communication apparatus has been correctly received, the second information is used to subtract 1 from values of counters of one or more communication apparatuses, the values of the counters of the one or more communication apparatuses are greater than 0, and the one or more communication apparatuses include a second communication apparatus; receives a second message, where the second message includes second identification information of the first communication apparatus; and receives a third message, where the third message includes first identification information of the second communication apparatus, and a value of a counter of the second communication apparatus is decreased to 0, where the second message and the third message do not overlap in time domain.

According to the foregoing method, the first message sent by the reader includes the first information and the second information, and after receiving the first message, a first tag and a second tag respectively send the second message and the third message to the reader, to reduce uplink-downlink conversion time, and improve efficiency of inventory. Optionally, it is further convenient to reduce a quantity of times of sending a preamble and a postamble, and further improve the efficiency of inventory.

In a possible design, the method further includes: determining, based on the first message, to delay receiving the second message; and determining start time of the second message based on a first delay offset.

In a possible design, determining the start time of the second message based on the first delay offset includes: determining the start time of the second message based on end time of the first message, first duration, and the first delay offset, where the first duration is predefined or preconfigured.

In a possible design, determining, based on the first message, to delay receiving the second message includes: if the first information in the first message is after the second information in time domain, determining to delay receiving the second message.

In a possible design, the first delay offset is determined based on at least one of: a length of the first identification information, a length of the preamble, a length of the postamble, a configured code rate, a configured coverage level, and a configured link rate.

In a possible design, the method further includes: determining start time of the third message based on the end time of the first message and the first duration, where the first duration is predefined or preconfigured.

In a possible design, the method further includes: determining, based on the first message, to delay receiving the third message; and determining start time of the third message based on a second delay offset.

In a possible design, determining the start time of the third message based on the second delay offset includes: determining the start time of the third message based on end time of the first message, first duration, and the second delay offset, where the first duration is predefined or preconfigured.

In a possible design, determining, based on the first message, to delay receiving the second message includes: if the first information in the first message is located before the second information in time domain, determining to delay receiving the third message.

In a possible design, the second delay offset is determined based on at least one of: a length of second identification information of the first communication apparatus, a length of the preamble, a length of the postamble, a configured code rate, a configured coverage level, and a configured link rate.

In a possible design, the method further includes: determining start time of the second message based on the end time of the first message and the first duration, where the first duration is predefined or preconfigured.

It may be understood that the communication methods provided in the second aspect and the third aspect correspond to that in the first aspect. For beneficial effects of related technical features in the second aspect and the third aspect, refer to the descriptions of the first aspect. Details are not described again.

According to a fourth aspect, an embodiment of this application provides a communication method. The method may be applied to a first communication apparatus, and the first communication apparatus may be a first tag or a component (for example, a chip or a circuit) in the first tag. For example, in the method, the first communication apparatus sends first identification information of the first communication apparatus, where a value of a counter of the first communication apparatus is 0; receives a first message, where the first message includes first information, and the first information indicates that the first identification information of the first communication apparatus has been correctly received; determines, based on the first message, whether to delay sending a second message; and sends the second message, where the second message includes second identification information of the first communication apparatus.

In a possible design, determining, based on the first message, whether to delay sending the second message includes: if the first message further includes second information, determining to delay sending the second message, where the second information is used to subtract 1 from values of counters of one or more communication apparatuses, and the values of the counters of the one or more communication apparatuses are greater than 0.

In a possible design, determining, based on the first message, whether to delay sending the second message includes: if the first message further includes second information, and the first information is after the second information in time domain, determining to delay sending the second message, where the second information is used to subtract 1 from values of counters of one or more communication apparatuses, and the values of the counters of the one or more communication apparatuses are greater than 0.

According to a fifth aspect, an embodiment of this application provides a communication method. The method may be applied to a second communication apparatus, and the second communication apparatus may be a second tag or a component (for example, a chip or a circuit) in the second tag. For example, in the method, the second communication apparatus receives a first message, where the first message includes second information, the second information is used to subtract 1 from values of counters of one or more communication apparatuses, the values of the counters of the one or more communication apparatuses are greater than 0, and the one or more communication apparatuses include the second communication apparatus; if a value of a counter of the second communication apparatus is decreased to 0, determines, based on the first message, whether to delay sending a third message; and sends the third message, where the third message includes first identification information of a first communication apparatus.

In a possible design, determining, based on the first message, whether to delay sending the third message includes: if the first message further includes first information, determining to delay sending the third message, where the first information indicates that the first identification information of the first communication apparatus has been correctly received.

In a possible design, determining, based on the first message, whether to delay sending the third message includes: if the first message further includes first information, and the first information is before the second information in time domain, determining to delay sending the third message, where the first information indicates that the first identification information of the first communication apparatus has been correctly received.

According to a sixth aspect, an embodiment of this application provides a communication method. The method may be applied to a third communication apparatus, and the third communication apparatus may be a reader or a component (for example, a chip or a circuit) in the reader. For example, in the method, the third communication apparatus determines whether first identification information of a first communication apparatus is received and whether further inventory is required; determines, based on a determining result, that a first message includes first information and/or second information, where the first information indicates that the first identification information of the first communication apparatus has been correctly received, the second information is used to subtract 1 from values of counters of one or more communication apparatuses, and the values of the counters of the one or more communication apparatuses are greater than 0; and sends the first message.

In a possible design, determining whether the first identification information of the first communication apparatus is received is: determining whether the first identification information of the first communication apparatus is received after the second information is sent previously.

In a possible design, determining, based on the determining result, that the first message includes the first information and/or the second information includes: if the determining result is that the first identification information of the first communication apparatus is not received, and query needs to be continued, determining that the first message includes the second information; or if the determining result is that the first identification information of the first communication apparatus is received, and query does not need to be continued, determining that the first message includes the first information; or if the determining result is that the first identification information of the first communication apparatus is received and query needs to be continued, determining that the first message includes the first information and the second information.

It may be understood that, for specific implementations of the fourth aspect to the sixth aspect, refer to the descriptions of the first aspect to the third aspect.

According to a seventh aspect, this application provides a communication apparatus. The communication apparatus can implement a function in any one of the first aspect to the sixth aspect. For example, the communication apparatus includes a corresponding module, unit, or means for performing operations in any one of the first aspect to the sixth aspect. The function, the unit, or the means may be implemented by software, hardware, or hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in any one of the first aspect to the sixth aspect.

In a possible design, the communication apparatus includes a processor, and the processor may be configured to be coupled to a memory. The memory may store a necessary computer program or instructions for implementing the function in any one of the first aspect to the sixth aspect. The processor may execute the computer program or the instructions stored in the memory. When the computer program or the instructions are executed, the communication apparatus is enabled to implement the method in any one of the possible designs or implementations of the first aspect to the sixth aspect.

In a possible design, the communication apparatus includes a processor and a memory, and the memory may store a necessary computer program or instructions for implementing a function in any one of the first aspect to the sixth aspect. The processor may execute the computer program or the instructions stored in the memory. When the computer program or the instructions are executed, the communication apparatus is enabled to implement the method in any one of the possible designs or implementations of the first aspect to the sixth aspect.

In a possible design, the communication apparatus includes a processor and an interface circuit. The processor is configured to: communicate with another apparatus through the interface circuit, and perform the method in any one of the possible designs or implementations of the first aspect to the sixth aspect.

It may be understood that, in the seventh aspect, the processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to an eighth aspect, this application provides a communication system. The communication system includes a first communication apparatus and a third communication apparatus, and optionally, further includes a second communication apparatus; or the communication system includes a first communication apparatus and a third communication apparatus, and optionally, further includes a first communication apparatus. The first communication apparatus is configured to perform the method in the first aspect, the second communication apparatus is configured to perform the method in the second aspect, and the third communication apparatus is configured to perform the method in the third aspect; or the first communication apparatus is configured to perform the method in the fourth aspect, the second communication apparatus is configured to perform the method in the fifth aspect, and the third communication apparatus is configured to perform the method in the sixth aspect.

According to a ninth aspect, this application provides a computer-readable storage medium. The computer storage medium stores computer-readable instructions, and when a computer reads and executes the computer-readable instructions, the computer is enabled to perform the method in any one of the possible designs of the first aspect to the sixth aspect.

For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can carry or store desired program code in a form of instructions or a data structure and that can be accessed by the computer.

According to a tenth aspect, this application provides a computer program product. When a computer reads and executes the computer program product, the computer is enabled to perform the method in any one of the possible designs of the first aspect to the sixth aspect.

According to an eleventh aspect, this application provides a chip (or a chip system). The chip includes a processor. The processor is coupled to a memory, and is configured to read and execute a software program stored in the memory, to implement the method according to any one of the possible designs of the first aspect to the sixth aspect.

### BRIEF DESCRIPTION OF DRAWINGS

FIG. 1 is a diagram of a communication system to which embodiments of this application are applicable;
FIG. 2A is a diagram of an inventory step procedure according to an embodiment of this application;
FIG. 2B is a diagram of a time sequence of inventory according to an embodiment of this application;
FIG. 3 is a diagram of a message structure according to an embodiment of this application;
FIG. 4 is a schematic flowchart corresponding to a communication method according to Embodiment 1 of this application;
FIG. 5A to FIG. 5D are a diagram of a structure of a first message according to an embodiment of this application;
FIG. 6 is a diagram of delayed sending of a second message according to an embodiment of this application;
FIG. 7 is a diagram of delayed sending of a third message according to an embodiment of this application;
FIG. 8 is a schematic flowchart corresponding to a communication method according to Embodiment 2 of this application;
FIG. 9 is a possible example block diagram of an apparatus according to an embodiment of this application; and
FIG. 10 is a diagram of a structure of a communication apparatus according to an embodiment of this application.

### DESCRIPTION OF EMBODIMENTS

The following describes technical solutions in embodiments of this application with reference to accompanying drawings in embodiments of this application. The technical solutions in embodiments of this application may be applied to various communication systems, for example, a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, and a future evolved communication system like a 6th generation (6th generation, 6G) mobile communication system.

Particularly, the technical solutions in embodiments of this application may be further applied to a communication system like the internet of things (internet of things, IoT), the narrowband internet of things (narrowband internet of things, NB-IoT), or the passive internet of things.

All aspects, embodiments, or features are presented in this application by describing a system that may include a plurality of devices, components, modules, and the like. It should be appreciated and understood that each system may include another device, component, module, and the like, and/or may include none of devices, components, modules, and the like described with reference to the accompanying drawings. In addition, a combination of these solutions may be used. In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

The communication system and service scenarios that are described in embodiments of this application are intended to describe the technical solutions in embodiments of this application more clearly, and do not constitute a limitation on the technical solutions provided in embodiments of this application. A person of ordinary skill in the art may know that with evolution of network architectures and emergence of new service scenarios, the technical solutions provided in embodiments of this application are also applicable to similar technical problems.

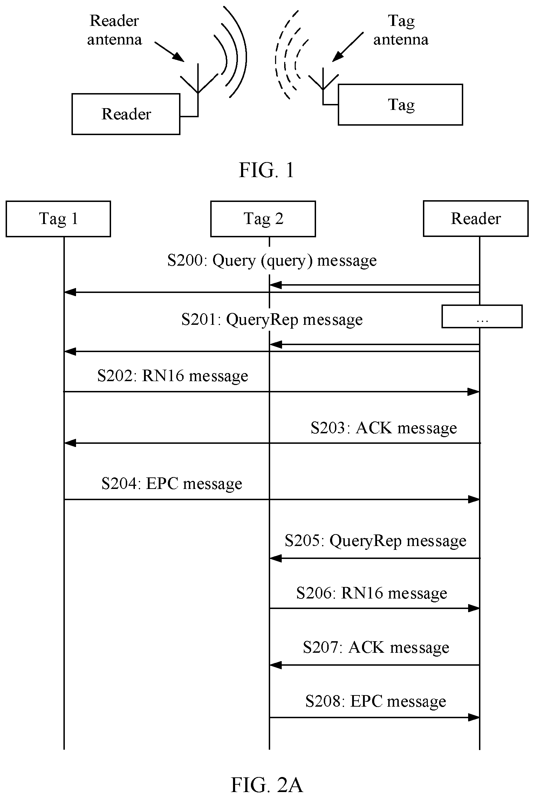

For ease of understanding embodiments of this application, a communication system shown in FIG. 1 is first used as an example to describe in detail a communication system applicable to embodiments of this application. As shown in FIG. 1, the communication system 10 includes a reader (reader) 11 and a tag 12. The reader 11 and the tag 12 may communicate with each other via a radio frequency (radio frequency, RF) signal. For example, the reader 11 may transmit an RF signal, and the tag 12 located near the reader 11 may receive the RF signal sent by the reader 11, and return a response RF signal to the reader 11, where the response RF signal may carry relevant information of the tag 12. Further, the reader 11 may receive and parse the response RF signal.

### (1) Reader

The reader may also be referred to as a reader/writer, an RFID reader, an interface device (interface device, IFD), or an interrogator (interrogator). The reader is a device or an apparatus that can obtain and process data of the tag. The reader may be used as an independent device, or may be embedded in another device or system. The reader may send a radio frequency signal to the tag through a reader antenna, to query data from or write data into the tag. The reader may be further connected to another device (for example, a computer) through a communication interface, to transmit data locally stored in the reader or data obtained from the tag to the another device. A specific form of the reader is not limited in embodiments of this application. For example, the reader may be a terminal device, a network device (for example, an access network device), a device having a function of reading and writing the tag, or a device in another possible form.

### (2) Tag

The tag may also be referred to as an electronic tag or an RFID tag. The tag is a micro wireless transceiver apparatus, and mainly includes a built-in tag antenna, a coupling element, and a chip. The chip has storage space that can support the reader in reading or writing tag data. After receiving, via the tag antenna, the radio frequency signal sent by the reader, the tag may implement coupling of the radio frequency signal via the coupling element. Further, energy can be provided for the chip of the tag on a coupling channel, and tag data stored in the chip may be fed back to the reader via the tag antenna. The tag may be an active tag, a passive tag, or a semi-active tag, and the passive tag may also be referred to as a passive internet of things device.

In a possible scenario, the tag may be considered as a terminal device, and the reader may be considered as an access network device (or the reader is integrated into the access network device). The access network device (that is, the reader) performs an operation on the tag (that is, the terminal device) based on an indication of a core network element. Uplink and downlink communication may be performed between the tag and the reader through an air interface (that is, a Uu interface), where that the tag sends information to the reader may be referred to as uplink communication, and that the reader sends information to the tag may be referred to as downlink communication.

It may be understood that FIG. 1 shows an example of one reader and one tag. In a communication system, one reader may communicate with a plurality of tags, and the communication system may include a plurality of readers/writers. A quantity of readers and a quantity of tags included in the communication system are not limited in embodiments of this application. In addition to the reader and the tag, the communication system may further include another device or network element, for example, a core network element. This is not limited in embodiments of this application.

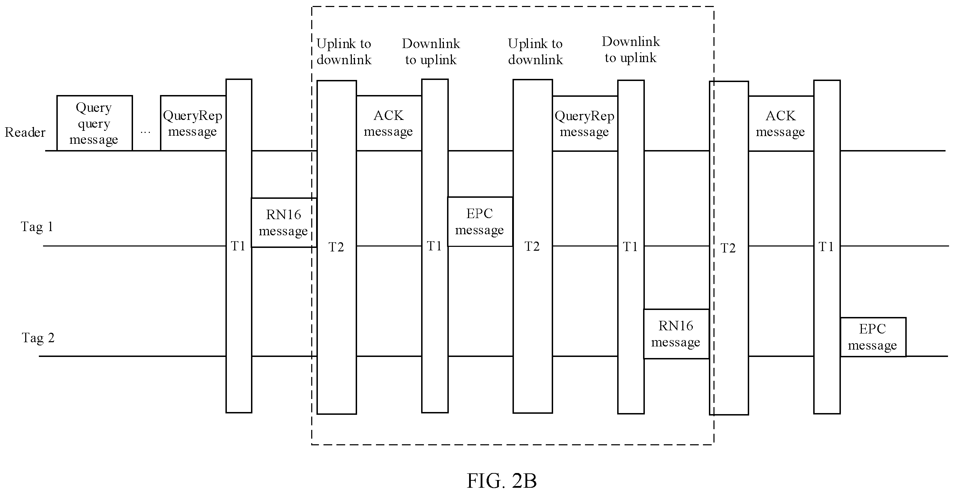

Based on the communication system shown in FIG. 1, FIG. 2A is a diagram of an inventory (inventory) step procedure, and FIG. 2B is a diagram of a time sequence of inventory. The inventory may also be referred to as stocktaking. Via an inventory procedure, a reader may obtain identification information of one or more tags. As shown in FIG. 2A, the step procedure includes the following steps.

S200: The reader sends a query (query) message; and correspondingly, a plurality of tags receive the query message.

For example, the query message may include a Q value, and further include other possible information, for example, information about a tag filtering condition. Correspondingly, after the tag receives the query message, if the tag determines that the tag filtering condition is met, a random number is generated based on the Q value as an initial value of a counter, where a value range of the random number is 0 to 2^{Q}-1. Subsequently, each time a QueryRep (QueryRep) message is received, a value of the counter of the tag is decreased by 1. When the value of the counter of the tag is 0, the tag enters a response status, and sends temporary identification information to the reader. The temporary identifier may be a 16-bit random number (RN16).

S201: The reader sends a QueryRep message 1; and correspondingly, the plurality of tags receive the QueryRep message.

For example, there may be a specific time interval between the query message and the QueryRep message 1. This is not limited in embodiments of this application.

S202: A tag 1 sends a response message 1 to the reader, where the response message 1 includes temporary identification information (that is, RN16) of the tag 1; and correspondingly, the reader receives the response message 1.

Herein, it is assumed that a value of a counter of the tag 1 is 0. Therefore, the tag 1 sends the response message 1 to a reader 1, where the response message 1 may also be referred to as an RN16 message.

S203: The reader sends an acknowledgement (acknowledgement, ACK) message 1, where the ACK message 1 includes the temporary identification information of the tag 1; and correspondingly, the tag 1 receives the ACK message 1.

S204: The tag 1 sends an electronic product code (electronic product code, EPC) message 1 to the reader; and correspondingly, the reader receives the EPC message 1.

For example, after receiving the ACK message 1, the tag 1 determines that the RN16 carried in the ACK message is the same as the RN16 that responds to the tag 1 previously, and sends the EPC message 1 to the reader. The EPC message 1 includes identification information (different from the temporary identification information) of the tag 1, and the identification information of the tag 1 may include the complete EPC (for example, a complete EPC whose actual length may be 96 bits) or a part of the EPC.

S205: The reader sends a QueryRep message 2; and correspondingly, the plurality of tags receive the QueryRep message 2.

S206: A tag 2 sends a response message 2 to the reader, where the response message 2 includes temporary identification information (that is, RN16) of the tag 2; and correspondingly, the reader receives the response message 2.

Herein, it is assumed that a value of a counter of the tag 2 is 0. Therefore, the tag 2 sends the response message 2 to a reader 2.

S207: The reader sends an acknowledgement (acknowledgement, ACK) message 2, where the ACK message 2 includes the temporary identification information of the tag 1; and correspondingly, the tag 1 receives the ACK message 2.

S208: The tag 1 sends an electronic product code (electronic product code, EPC) message 2 to the reader, where the EPC message 2 includes identification information of the tag 2; and correspondingly, the reader receives the EPC message 2.

It may be understood that, the inventory step procedure shown in FIG. 2A may be a partial procedure, and subsequently, another tag may further send an EPC message to the reader. This is not limited in embodiments of this application.

The time sequence shown in FIG. 2B corresponds to the step procedure shown in FIG. 2A. For FIG. 2B, refer to the descriptions in FIG. 2A. T1 shown in FIG. 2B is a time interval between the end of sending signaling by the reader and the start of sending signaling by the tag; and T2 shown in FIG. 2B is a time interval between the end of sending signaling by the tag and the start of sending signaling by the reader.

Optionally, the message sent by the reader or the tag includes a preamble (preamble) and/or a postamble (postamble), and a function of the preamble and/or the postamble is to determine a start location and an end location of the message. For example, when the tag receives the preamble, the tag determines to receive data from the reader. When the tag receives the postamble, it indicates that this transmission ends. In addition, because the tag is a low-cost apparatus, timing precision may be poor. Therefore, the preamble and the postamble may be further used to assist the tag in synchronization, to improve data receiving/sending performance.

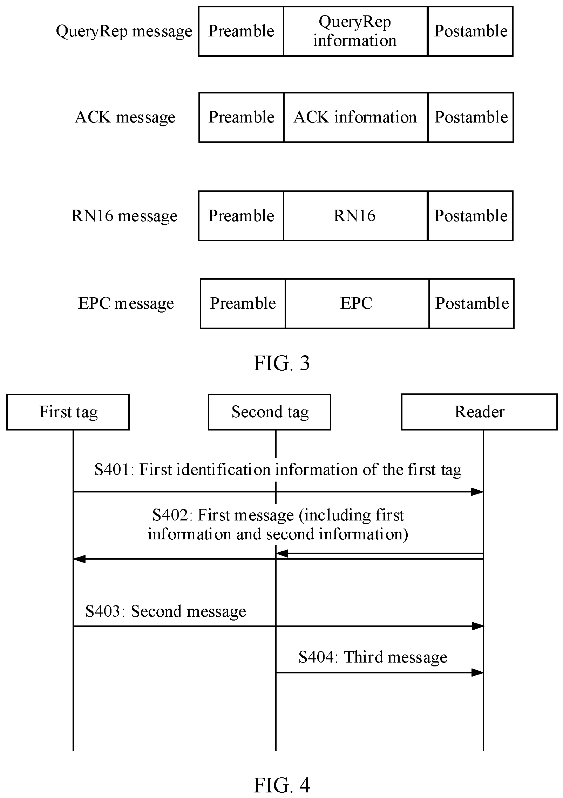

For example, the message sent by the reader or the tag includes the preamble and the postamble. As shown in FIG. 3, the QueryRep message includes a preamble, QueryRep information, and a postamble, the ACK message includes a preamble, ACK information, and a postamble, the RN16 message includes a preamble, an RN16, and a postamble, and the EPC message includes a preamble, an EPC, and a postamble. The QueryRep message is used as an example. The preamble is located before the QueryRep information in time domain, and the QueryRep information is located before the postamble in time domain. The other messages may be understood based on this.

It can be seen from FIG. 2A and FIG. 2B that, in an inventory process, for each tag, the reader needs to complete message sending twice (the QueryRep message and the ACK message), and the tag also needs to complete message sending twice (the RN16 message and the EPC message), resulting in low efficiency of inventory using tags.

Based on this, an embodiment of this application provides a communication method, to improve efficiency of inventory using tags. The communication method provided in embodiments of this application relates to a plurality of communication apparatuses (for example, a first communication apparatus, a second communication apparatus, and a third communication apparatus). The first communication apparatus or the second communication apparatus may be a tag, or may be a component in the tag, for example, a chip disposed in a terminal. The third communication apparatus may be a reader, or may be a component in the reader, for example, a chip disposed in the reader. In embodiments of this application, an example in which "the first communication apparatus is a first tag, the second communication apparatus is a second tag, and the third communication apparatus is a reader" is used for description.

Herein, related nouns in embodiments of this application are first explained and described.
(1) First identification information is temporary identification information of a tag, for example, an RN16 or other information used to temporarily identify the tag. This is not specifically limited. In embodiments of this application, first identification information of different tags has a same quantity of bits. For example, both first identification information of the first tag and first identification information of the second tag are 16-bit random numbers.
(2) Second identification information is an EPC of the tag or a part of the EPC, or may be other information used to identify the tag. This is not specifically limited. In embodiments of this application, second identification information of different tags has a same quantity of bits. For example, both second identification information of the first tag and second identification information of the second tag are 96-bit EPCs.
(3) Start time of a message is time or a moment at which the message starts to be transmitted (sent/received), or rising time of the first bit of the message. If the message includes a preamble, the start time of the message is time or a moment at which the preamble starts to be transmitted.
(4) End time of the message is time or a moment at which message transmission ends, or rising time of the last bit of the message. If the message includes a postamble, the end time of the message is time or a moment at which transmission of the postamble ends.
(5) A code rate is a ratio of a quantity of valid transmitted information bits (which may include check bits) to a total quantity of transmitted bits.
(6) Coverage level: Different coverage levels correspond to different channel conditions, for example, a signal-to-interference-plus-noise ratio (signal-to-interference-plus-noise ratio, SINR) condition. Quantities of repetition times, code rates, and the like that correspond to transmission may be determined based on different coverage levels, to adjust transmission performance in different channel conditions.
(7) A link rate is time required to transmit a quantity of bits per unit. The link rate may be replaced with other descriptions, such as "radio frequency pulse width (indicating a width in square wave time)", or "link frequency", or "division ratio", or "reference time interval".

The following describes the communication method provided in embodiments of this application in detail with reference to Embodiment 1 and Embodiment 2.

### Embodiment 1

FIG. 4 is a schematic flowchart corresponding to a communication method according to Embodiment 1 of this application. As shown in FIG. 4, the procedure may include the following steps.

S401: A first tag sends first identification information of the first tag to a reader, where a value of a counter of the first tag is 0; and correspondingly, the reader receives the first identification information of the first tag.

For example, before S301, the first tag receives a message a sent by the reader, where the message a includes QueryRep information. Further, the value of the counter of the first tag is decreased by 1; and if the value of the counter of the first tag is 0 after the value is decreased by 1, the first tag enters a response status, and sends the first identification information of the first tag to the reader. For example, the first tag sends the first identification information of the first tag to the reader via an RN16 message, and the message a is a QueryRep message.

The "counter" in this embodiment of this application may also be replaced with another possible name. This is not specifically limited.

S402: The reader sends a first message, where the first message includes first information and second information, the first information indicates that the first identification information of the first tag has been correctly received, and the second information is used to subtract 1 from values of counters of one or more tags.
(1) Content included in the first message is described.

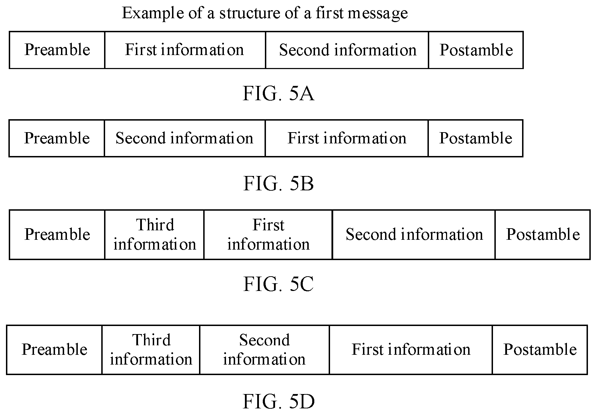

For example, the first information is ACK information. For example, the first information includes the first identification information of the first tag, and the second information is QueryRep information. The first information is located before the second information in time domain, as shown in FIG. 5A or FIG. 5C; or the first information is located after the second information in time domain, as shown in FIG. 5B or FIG. 5D.

Optionally, the first message further includes third information, and the third information indicates that the first message includes the first information and the second information. Further, optionally, the third information further indicates a location relationship between the first information and the second information in time domain. For example, the third information indicates that the first information is before the second information in time domain, or the first information is after the second information in time domain. In a possible implementation, the third information is located before the first information and the second information in time domain, as shown in FIG. 5C or FIG. 5D.

In addition, the first message may further include other possible information, for example, a preamble and/or a postamble. This is not specifically limited.

(2) The one or more tags are described.

For example, the values of the counters of the one or more tags are greater than 0. After the first message is received, the one or more tags may decrease the values of the counters by 1 based on the second information in the first message. For example, the one or more tags include a second tag, and the second tag decreases a value of a counter by 1 based on the second information in the first message. The value of the counter of the second tag is 0 after being decreased by 1 (that is, the value of the counter of the second tag is decreased to 0).

This embodiment of this application is described by using an example in which "the value of the counter of the second tag in the one or more tags is decreased to 0, and a value of a counter of another tag is still greater than 0 after being decreased by 1". It may be understood that, if a third tag still exists in the one or more tags, and a value of a counter of the third tag is also decreased to 0, for the third tag, refer to the descriptions of the second tag; or all the values of the counters of the one or more tags are still greater than 0 after being decreased by 1. In this case, no tag sends an RN16 message to the reader.

S403: The first tag sends a second message to the reader, where the second message includes second identification information of the first tag; and correspondingly, the reader receives the second message.

For example, after the first tag receives the first message, if it is determined that identification information included in the first information is the same as the first identification information sent by the first tag previously, it indicates that the reader has correctly received the first identification information of the first tag. Further, the first tag may send the second message to the reader. For example, the second message is an EPC message.

S404: The second tag sends a third message to the reader, where the third message includes first identification information of the second tag; and correspondingly, the reader receives the third message.

For example, when the value of the counter of the second tag is decreased to 0, the second tag may send the third message to the reader. For example, the third message is an RN16 message.

The second message and the third message do not overlap in time domain, to avoid interference between different messages and facilitate the reader to correctly receive the second message and the third message. There are a plurality of implementations in which "the second message and the third message do not overlap in time domain". The following describes two possible implementations with reference to Implementation 1 and Implementation 2.

### (1) Implementation 1

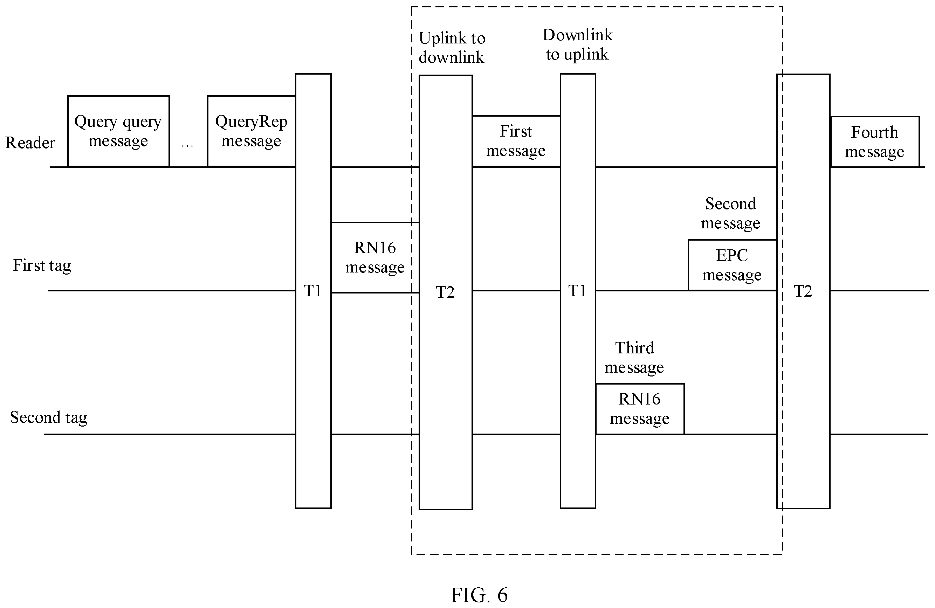

In Implementation 1, the RN16 message (for example, the third message) is located before the EPC message (the second message) in time domain, as shown in FIG. 6. The following describes the first tag, the second tag, and the reader separately. The first tag is a tag that has sent the first identification information to the reader (that is, a tag that sends the first identification information to the reader after the reader sends QueryRep information last time). The second tag is a tag whose value of a counter is decreased to 0 (that is, a tag whose value of a counter is 0 after being decreased by 1 based on the second information in the first message).

(1.1) Description is provided from a perspective of the first tag.

The first tag determines, based on the first message, to delay sending the second message; and determines start time of the second message based on a first delay offset. Further, the first tag sends the second message at the start time of the second message.

The following describes a specific implementation in which "the first tag determines, based on the first message, to delay sending the second message".

In a possible implementation, if the first tag determines that the first message includes the first information and the second information, the first tag determines to delay sending the second message. There are a plurality of implementations in which the first tag determines that the first message includes the first information and the second information. For example, as shown in FIG. 5A or FIG. 5B, the first tag determines, by parsing the first message, that the first message includes the first information and the second information. For another example, as shown in FIG. 5C or FIG. 5D, the first message includes the third information (the third information indicates that the first message includes the first information and the second information). Further, the first tag determines, based on the third information in the first message, that the first message includes the first information and the second information.

In another possible implementation, after determining that the first message includes the first information and the second information, the first tag further determines the location relationship between the first information and the second information in time domain, and if the first information is after the second information in time domain, determines to delay sending the second message. There are a plurality of implementations in which the first tag determines the location relationship between the first information and the second information in time domain. For example, as shown in FIG. 5B, the first tag determines, by parsing the first message, that the first information is after the second information in time domain. For another example, as shown in FIG. 5D, the first message includes the third information (the third information indicates that the first information is after the second information in time domain). Further, the first tag determines, based on the third information, that the first information is after the second information in time domain.

In still another possible implementation, the first message further includes fourth information, and the fourth information indicates to delay sending the second message. Further, the first tag determines, based on the fourth information, to delay sending the second message. Optionally, the fourth information further indicates a delay offset (that is, the first delay offset).

The following describes a specific implementation in which "the first tag determines the start time of the second message based on the first delay offset".

In a possible implementation, the first tag determines the start time of the second message based on end time of the first message, first duration, and the first delay offset. For example, the start time of the second message is Ta, and Ta=the end time of the first message+the first duration+the first delay offset. In specific implementation, considering that there may be additional processing time or an error, it may be considered that the end time of the first message, the first duration, and the first delay offset are main parameters used to determine the start time of the second message instead of all parameters. In other words, the start time of the second message may be further determined based on another possible parameter. This is not specifically limited, and other similar parts can be handled in the same way.

The first duration is predefined or preconfigured, and the first duration may be equal to T1. For example, a fixed value like 100 microseconds (µs) is predefined or preconfigured. In this case, the first duration is equal to 100 µs. For another example, a value range like 95 µs to 105 µs, is predefined or preconfigured. In this case, the first tag may select a value from the value range as the first duration.

In an example, the first delay offset is predefined or preconfigured. Refer to the foregoing descriptions of the "first duration".

In another example, the first message includes the fourth information, and the fourth information indicates to delay sending the second message, and further indicates the first delay offset. Further, the first tag directly obtains the first delay offset from the first message.

In still another example, the first tag determines the first delay offset based on at least one of the following ①②③④⑤⑥; or in other words, the first tag determines transmission duration of the third message based on at least one of the following ①②③④⑤⑥, to determine the first delay offset based on the transmission duration of the third message. It may be understood that the first tag does not know whether another tag definitely sends the third message (that is, the RN16 message). However, because the another tag may send the third message, the first tag needs to estimate the transmission duration of the third message, and an offset (that is, the first delay offset) for delaying sending the second message is greater than or equal to the transmission duration of the third message, to avoid overlapping between the second message and the third message in time domain.

The transmission duration of the third message is related to at least one of a quantity of bits of the third message, a code rate of the third message, a coverage level, or a link rate for transmitting the third message. The code rate, the coverage level, and the link rate may be configured by the reader for the first tag. For example, the reader indicates the code rate, the coverage level, and the link rate to a terminal via a query message. The reader may directly indicate the code rate, the coverage level, or the link rate, or the first tag may determine or calculate the code rate, the coverage level, or the link rate based on configuration information sent by the reader. Therefore, parameters used to determine the first delay offset may include: ① a length of the first identification information, ② a length of the preamble, ③ a length of the postamble, ④ a configured code rate, ⑤ a configured coverage level, and ⑥ a configured link rate. The "length" may be replaced with "transmission duration" or "a quantity of bits".

For example, if the third message includes a preamble, the first identification information of the second tag, and a postamble, the first delay offset is determined based on ①②③④⑤⑥; or if the third message includes the first identification information (excluding the preamble and the postamble) of the second tag, the first delay offset is determined based on ①④⑤⑥. Details are not described again.

(1.2) Description is provided from a perspective of the second tag.

The second tag determines, based on the first message, not to delay sending the third message. When determining not to delay sending the third message, the second tag may determine start time of the third message based on end time of the first message and first duration, to send the third message at the start time of the third message. For example, the start time of the third message is Tb, and Tb=the end time of the first message+the first duration.

For example, a specific implementation in which "the second tag determines, based on the first message, not to delay sending the third message" is follows: If the second tag determines that the first message includes the first information and the second information, the second tag determines not to delay sending the third message. Alternatively, after determining that the first message includes the first information and the second information, the second tag further determines the location relationship between the first information and the second information in time domain, and if the first information is after the second information in time domain, determines not to delay sending the third message. For details, refer to the foregoing descriptions of the first tag.

(1.3) Description is provided from a perspective of the reader.

After sending the first message, the reader may determine start time of the second message and start time of the third message, to receive the second message at the start time of the second message, and receive the third message at the start time of the third message.

Specifically, the reader determines, based on the first message, to delay receiving the second message and not to delay receiving the third message. For example, if determining that the first message includes the first information and the second information, the reader determines to delay receiving the second message and not delay receiving the third message. For another example, after determining that the first message includes the first information and the second information, the reader further determines the location relationship between the first information and the second information in time domain, and if the first information is after the second information in time domain, determines to delay sending the second message and not delay receiving the third message. Further, the reader determines the start time of the second message based on end time of the first message, first duration, and the first delay offset; and determines the start time of the third message based on the end time of the first message and the first duration. For implementation on a reader side, refer to the foregoing descriptions of the first tag and the second tag.

It may be understood that Implementation 1 is described by using an example in which "if the first information is located after the second information in time domain, sending of the second message is delayed, and sending of the third message is not delayed". In another embodiment, "if the first information is located before the second information in time domain, sending of the second message is delayed, and sending of the third message is not delayed". Details are not described again.

### (2) Implementation 2

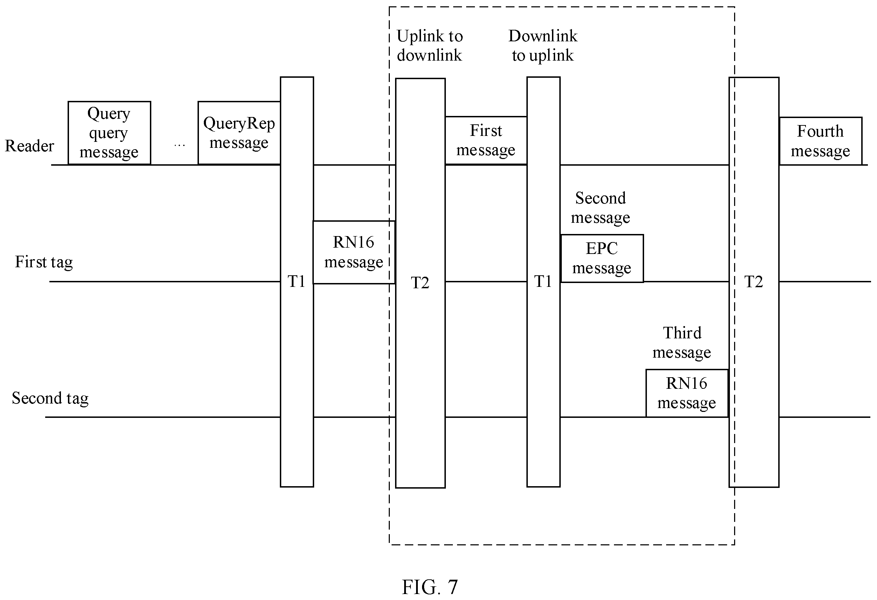

In Implementation 1, the RN16 message (for example, the third message) is located after the EPC message (the second message) in time domain, as shown in FIG. 7.

(2.1) Description is provided from a perspective of the first tag.

Because the first tag has sent the first identification information to the reader, the first tag may directly determine not to delay sending the second message; or the first tag determines, based on the first message, not to delay sending the second message. When determining not to delay sending the second message, the first tag may determine start time of the second message based on end time of the first message and first duration, to send the second message at the start time of the second message. For example, the start time of the second message is Tb, and Tb=the end time of the first message+the first duration.

For example, a specific implementation in which "the first tag determines, based on the first message, not to delay sending the second message" is follows: After determining that the first message includes the first information and the second information, the first tag further determines the location relationship between the first information and the second information in time domain, and if the first information is located before the second information in time domain, determines not to delay sending the second message.

(2.2) Description is provided from a perspective of the second tag.

The second tag determines, based on the first message, to delay sending the third message; and determines start time of the third message based on a second delay offset. Further, the second tag sends the third message at the start time of the third message.

The following describes a specific implementation in which "the first tag determines, based on the first message, to delay sending the second message".

In a possible implementation, if determining that the first message includes the first information and the second information, the second tag determines to delay sending the third message.

In another possible implementation, after determining that the first message includes the first information and the second information, the second tag further determines the location relationship between the first information and the second information in time domain, and if the first information is before the second information in time domain, determines to delay sending the third message.

In still another possible implementation, the first message further includes fifth information, and the fifth information indicates to delay sending the third message. Further, the second tag determines, based on the fifth information, to delay sending the third message. Optionally, the fifth information further indicates a delay offset (that is, the second delay offset).

The following describes a specific implementation in which "the second tag determines the start time of the third message based on the second delay offset".

In a possible implementation, the second tag determines the start time of the third message based on end time of the first message, first duration, and the second delay offset. For example, the start time of the third message is Tc, and Tc=the end time of the first message+the first duration+the second delay offset.

In an example, the second delay offset is predefined or preconfigured. Refer to the foregoing descriptions of the "first duration".

In another example, the first message includes the fifth information, and the fifth information indicates to delay sending the third message, and further indicates the second delay offset. Further, the second tag directly obtains the second delay offset from the first message.

In still another example, the second tag determines the second delay offset based on at least one of the following ①②③④⑤⑥; or in other words, the second tag determines transmission duration of the second message based on at least one of the following ①②③④⑤⑥, to determine the second delay offset based on the transmission duration of the second message. It may be understood that the second tag needs to estimate the transmission duration of the second message, and an offset (that is, the second delay offset) for delaying sending the third message is greater than or equal to the transmission duration of the second message, to avoid overlapping between the second message and the third message in time domain.

The transmission duration of the second message is related to at least one of a quantity of bits of the second message, a code rate of the second message, a coverage level, or a link rate for transmitting the second message. Therefore, parameters used to determine the second delay offset may include: ① a length of the second identification information, ② a length of a preamble, ③ a length of a postamble, ④ a configured code rate, ⑤ a configured coverage level, and ⑥ a configured link rate.

(2.3) Description is provided from a perspective of the reader.

After sending the first message, the reader may determine start time of the second message and start time of the third message, to receive the second message at the start time of the second message, and receive the third message at the start time of the third message.

Specifically, the reader determines, based on the first message, not to delay receiving the second message, and to delay receiving the third message. For example, if determining that the first message includes the first information and the second information, the reader determines not to delay receiving the second message and delay receiving the third message. For another example, after determining that the first message includes the first information and the second information, the reader further determines the location relationship between the first information and the second information in time domain, and if the first information is before the second information in time domain, determines not to delay sending the second message, and delays receiving the third message. Further, the reader determines the start time of the second message based on end time of the first message and first duration; and determines the start time of the third message based on the end time of the first message, the first duration, and the second delay offset. For implementation on a reader side, refer to the foregoing descriptions of the first tag and the second tag.

It may be understood that Implementation 2 is described by using an example in which "if the first information is located before the second information in time domain, sending of the second message is not delayed, and sending of the third message is delayed". In another embodiment, "if the first information is located after the second information in time domain, sending of the second message is not delayed, and sending of the third message is delayed". Details are not described again.

Optionally, after S404, the reader sends a fourth message, where the fourth message includes the fourth information (that is, ACK information), and the fourth information indicates that the first identification information of the second tag has been correctly received. Optionally, the fourth message further includes QueryRep information. For subsequent implementation, refer to descriptions in this embodiment of this application.

According to the foregoing method, the first message sent by the reader includes the first information and the second information (that is, the QueryRep information and the ACK information is combined into one message), and after receiving the first message, the first tag and the second tag respectively send the second message (EPC message) and the third message (RN16 message) to the reader. In this way, as shown in FIG. 6 or FIG. 7, after receiving the RN16 message of the first tag, the reader performs uplink-downlink conversion twice, to receive the EPC message of the first tag and the RN16 message of the second tag. As shown in FIG. 2B, after receiving the RN16 message of the tag 1, the reader can receive the EPC message of the tag 1 and the RN16 message of the tag 2 only after performing uplink-downlink conversion four times. Therefore, the method in the embodiment of this application can effectively reduce a quantity of uplink-downlink conversions in an inventory procedure, and improve efficiency of inventory.

Optionally, in FIG. 2B, when the QueryRep message includes a preamble, QueryRep information, and a postamble, and the ACK message includes a preamble, ACK information, and a postamble, the reader separately sends the QueryRep message and the ACK message. In this case, the preamble and the postamble need to be sent twice. In this embodiment of this application, the reader combines the QueryRep information and the ACK information into one message. Therefore, the preamble and the postamble need to be sent only once. This can effectively reduce a quantity of times of sending the preamble and the postamble, and further improve the efficiency of inventory.

Embodiment 1 describes a related implementation in which "the first message sent by the reader includes the first information and the second information". In the whole inventory process, the reader may send a first message multiple times, some first messages include the first information and the second information, some first messages include the first information (excluding the second information), and some first messages include the second information (excluding the first information). Therefore, in Embodiment 2, "how the reader determines the content of the first message and how the tag responds after receiving the first message" is described. In Embodiment 2, the reader determines that the first message includes the first information and the second information. In this case, refer to Embodiment 1 for subsequent implementation.

### Embodiment 2

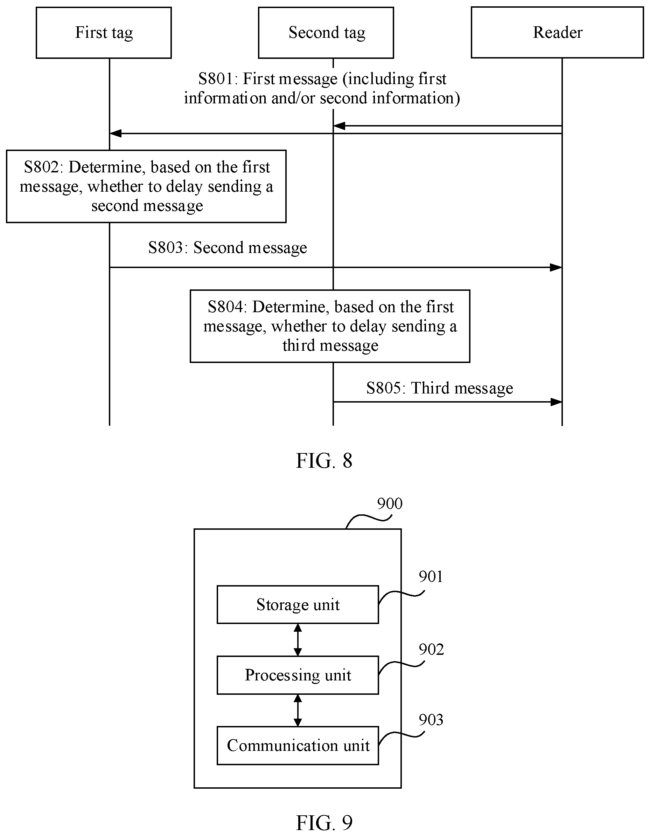

FIG. 8 is a schematic flowchart corresponding to a communication method according to Embodiment 2 of this application. As shown in FIG. 8, the procedure may include the following steps.

S801: A reader determines content of a first message, and sends the first message; and correspondingly, one or more tags receive the first message, where the one or more tags include a first tag and a second tag.

For example, the reader may determine the content of the first message based on whether first identification information of a tag is received (that is, whether the first identification information of the tag is received after the reader sends QueryRep information previously) and whether it is necessary to continue inventory. A specific implementation in which the reader determines whether inventory needs to be performed is not limited in embodiments of this application.

For example, if the reader determines that first identification information of the first tag is received and that inventory needs to be performed, the reader determines that the first message includes first information and second information (that is, ACK+QueryRep and QueryRep+ACK). For the first information and the second information, refer to the descriptions in Embodiment 1. In this case, S802 to S805 may be subsequently performed.

Alternatively, if the reader determines that the first identification information of the first tag is received and that inventory does not need to be performed, the reader determines that the first message includes the first information (excluding the second information, that is, ACK only). In this case, S802 and S803 may be subsequently performed.

Alternatively, if the reader determines that the first identification information of the tag is not received and that inventory needs to be performed, the reader determines that the first message includes the second information (excluding the first information, that is, QueryRep only). In this case, S804 and S805 may be subsequently performed.

Optionally, the first message further includes indication information, and the indication information indicates that the first message includes the first information and/or the second information, or the indication information indicates a type of the first message. For example, the type of the first message is ACK+QueryRep, QueryRep+ACK, ACK only, or QueryRep only.

S802: The first tag determines, based on the first message, whether to delay sending a second message.

S803: The first tag sends the second message, where the second message includes second identification information of the first tag; and correspondingly, the reader receives the second message.

Specifically, if the first message includes the first information and the second information, for a specific implementation in which the first tag determines whether to delay sending the second message, refer to Embodiment 1.

Alternatively, if the first message includes the first information (for example, ACK only), the first tag determines not to delay sending the second message. For example, the first tag determines start time of the second message based on end time of the first message and first duration, and sends the second message at the start time of the second message. In addition, from a perspective of the reader, if the first message includes the first information, the reader determines not to delay receiving the second message.

S804: The second tag determines, based on the first message, whether to delay sending a third message.

S805: The second tag sends the third message, where the third message includes first identification information of the second tag.

Specifically, if the first message includes the first information and the second information, for a specific implementation in which the second tag determines whether to delay sending the third message, refer to Embodiment 1.

Alternatively, if the first message includes the second information (for example, QueryRep only), the second tag may decrease a value of a counter by 1; and if the value of the counter is 0 after being decreased by 1, determine not to delay sending the third message. For example, the second tag determines start time of the third message based on the end time of the first message and the first duration, and sends the third message at the start time of the third message. In addition, from the perspective of the reader, if the first message includes the second information, the reader determines not to delay receiving the third message.

For the foregoing two embodiments, it may be understood that:
(1) Embodiment 1 and Embodiment 2 are described by using an example in which "the QueryRep information and the ACK information are combined into one message". The QueryRep information may also be replaced with other possible information, for example, replaced with QueryAdjust (QueryAdjust) information, in other words, the QueryAdjust information and the ACK information may be combined into one message. In another embodiment, other two possible messages in the inventory process may be combined into one message for sending. For a specific implementation, refer to descriptions in embodiments of this application.
(2) The foregoing focuses on the differences between Embodiment 1 and Embodiment 2, and content other than the differences may be mutually referenced. In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof. In addition, in a same embodiment, different implementations or different examples may reference or refer to each other.
(3) Various numerals in this application are for differentiation merely for ease of description, but are not for limiting the scope of this application. Step numbers in the foregoing flowcharts are merely examples of execution procedures, and do not constitute a limitation on an execution sequence of the steps. In other words, the step numbers do not mean the execution sequence, and the execution sequence of the steps should be determined based on a function and internal logic of the steps. In addition, not all steps shown in each flowchart are mandatory, and some steps may be added or deleted for each flowchart based on an actual requirement.

The foregoing mainly describes, from a perspective of interaction between the tag and the reader, the solutions provided in embodiments of this application. It may be understood that, to implement the foregoing functions, the tag and the reader each may include a corresponding hardware structure and/or a software module that implements each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the tag and the reader may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When the integrated unit is used, FIG. 9 is a possible example block diagram of an apparatus according to an embodiment of this application. As shown in FIG. 9, the apparatus 900 may include a processing unit 902 and a communication unit 903. The processing unit 902 is configured to control and manage an action of the apparatus 900. The communication unit 903 is configured to support communication between the apparatus 900 and another device. The communication unit 903 is also referred to as a transceiver unit, and may include a receiving unit and/or a sending unit, respectively configured to perform a receiving operation and a sending operation. Optionally, the apparatus 900 may further include a storage unit 901, configured to store program code and/or data of the apparatus 900.
(1) The apparatus 900 may be the first communication apparatus (for example, the first tag) in the foregoing embodiment. The processing unit 902 may support the apparatus 900 in performing the actions of the first tag in the foregoing method examples. Alternatively, the processing unit 902 mainly performs internal actions of the first tag in the method examples, and the communication unit 903 may support the communication between the apparatus 900 and the another device.

In an embodiment, the communication unit 903 is configured to: send first identification information of the first communication apparatus, where a value of a counter of the first communication apparatus is 0; receive a first message, where the first message includes first information and second information, the first information indicates that the first identification information of the first communication apparatus has been correctly received, the second information is used to subtract 1 from values of counters of one or more communication apparatuses, and the values of the counters of the one or more communication apparatuses are greater than 0; and send a second message, where the second message includes second identification information of the first communication apparatus.

In a possible design, the processing unit 902 is configured to: determine, based on the first message, to delay sending the second message; and determine start time of the second message based on a first delay offset.

In a possible design, the processing unit 902 is specifically configured to determine the start time of the second message based on end time of the first message, first duration, and the first delay offset, where the first duration is predefined or preconfigured.

In a possible design, the processing unit 902 is specifically configured to: if the first information in the first message is after the second information in time domain, determine to delay sending the second message.

In a possible design, the processing unit 902 is configured to determine start time of the second message based on end time of the first message and first duration, where the first duration is predefined or preconfigured.

In a possible design, the processing unit 902 is further configured to determine that the first information in the first message is before the second information in time domain.

(2) The apparatus 900 may be the second communication apparatus (for example, the second tag) in the foregoing embodiment. The processing unit 902 may support the apparatus 900 in performing the actions of the second tag in the foregoing method examples. Alternatively, the processing unit 902 mainly performs internal actions of the second tag in the method examples, and the communication unit 903 may support the communication between the apparatus 900 and the another device.

In an embodiment, the communication unit 903 is configured to: receive a first message, where the first message includes first information and second information, the first information indicates that first identification information of a first communication apparatus has been correctly received, the second information is used to subtract 1 from values of counters of one or more communication apparatuses, the values of the counters of the one or more communication apparatuses are greater than 0, and the one or more communication apparatuses include the second communication apparatus; and if a value of a counter of the second communication apparatus is decreased to 0, send a third message, where the third message includes first identification information of the second communication apparatus.

In a possible design, the processing unit 902 is configured to: determine, based on the first message, to delay sending the third message; and determine start time of the third message based on a second delay offset.

In a possible design, the processing unit 902 is specifically configured to determine the start time of the third message based on end time of the first message, first duration, and the second delay offset, where the first duration is predefined or preconfigured.

In a possible design, the processing unit 902 is specifically configured to: if the first information in the first message is before the second information in time domain, determine to delay sending the third message.

In a possible design, the processing unit 902 is configured to determine start time of the third message based on end time of the first message and first duration, where the first duration is predefined or preconfigured.

In a possible design, the processing unit 902 is further configured to determine that the first information in the first message is after the second information in time domain.

(3) The apparatus 900 may be the third communication apparatus (for example, the reader) in the foregoing embodiment. The processing unit 902 may support the apparatus 900 in performing the actions of the reader in the foregoing method examples. Alternatively, the processing unit 902 mainly performs internal actions of the reader in the method examples, and the communication unit 903 may support the communication between the apparatus 900 and the another device.

In an embodiment, the communication unit 903 is configured to: receive first identification information of a first communication apparatus, where a value of a counter of the first communication apparatus is 0; send a first message, where the first message includes first information and second information, the first information indicates that the first identification information of the first communication apparatus has been correctly received, the second information is used to subtract 1 from values of counters of one or more communication apparatuses, the values of the counters of the one or more communication apparatuses are greater than 0, and the one or more communication apparatuses include a second communication apparatus; receive a second message, where the second message includes second identification information of the first communication apparatus; and receive a third message, where the third message includes first identification information of the second communication apparatus, and a value of a counter of the second communication apparatus is decreased to 0, where the second message and the third message do not overlap in time domain.

In a possible design, the processing unit 902 is configured to: determine, based on the first message, to delay receiving the second message; and determine start time of the second message based on a first delay offset.

In a possible design, the processing unit 902 is specifically configured to determine the start time of the second message based on end time of the first message, first duration, and the first delay offset, where the first duration is predefined or preconfigured.

In a possible design, the processing unit 902 is specifically configured to: if the first information in the first message is after the second information in time domain, determine to delay receiving the second message.

In a possible design, the processing unit 902 is further configured to determine start time of the third message based on the end time of the first message and the first duration, where the first duration is predefined or preconfigured.

In a possible design, the processing unit 902 is configured to: determine, based on the first message, to delay receiving the third message; and determine start time of the third message based on a second delay offset.

In a possible design, the processing unit 902 is specifically configured to determine the start time of the third message based on end time of the first message, first duration, and the second delay offset, where the first duration is predefined or preconfigured.

In a possible design, the processing unit 902 is specifically configured to: if the first information in the first message is before the second information in time domain, determine to delay receiving the third message.

In a possible design, the processing unit 902 is further configured to determine start time of the second message based on the end time of the first message and the first duration, where the first duration is predefined or preconfigured.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

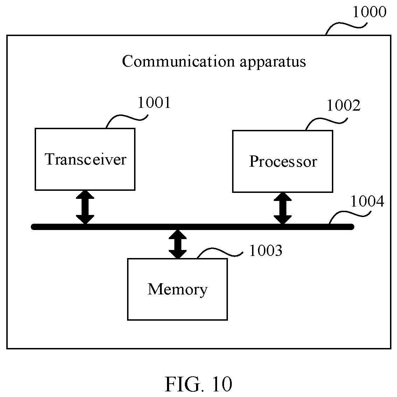

Based on a same technical concept, an embodiment of this application further provides a communication apparatus. Refer to FIG. 10. A communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send messages and the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The transceiver 1001, the processor 1002, and the memory 1003 are interconnected. Optionally, the transceiver 1001, the processor 1002, and the memory 1003 are connected to each other through a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line represents the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, thereby implementing a function of the communication apparatus 1000.

For example, the communication apparatus 1000 may be the first communication apparatus (for example, the first tag) in the foregoing embodiment, or may be the second communication apparatus (for example, the second tag) in the foregoing embodiment.

When the communication apparatus 1000 implements a function of the first tag in the foregoing method embodiment, the transceiver 1001 may implement a receiving/sending operation performed by the first tag in the foregoing method embodiment, and the processor 1002 may implement an operation other than the receiving/sending operation performed by the first tag in the foregoing method embodiment. For specific related descriptions, refer to the related descriptions in the foregoing embodiments. Details are not described herein again.

When the communication apparatus 1000 implements a function of the second tag in the foregoing method embodiment, the transceiver 1001 may implement a receiving/sending operation performed by the second tag in the foregoing method embodiment, and the processor 1002 may implement an operation other than the receiving/sending operation performed by the second tag in the foregoing method embodiment. For specific related descriptions, refer to the related descriptions in the foregoing embodiments. Details are not described herein again.

When the communication apparatus 1000 implements a function of the reader in the foregoing method embodiment, the transceiver 1001 may implement a receiving/sending operation performed by the reader in the foregoing method embodiment, and the processor 1002 may implement an operation other than the receiving/sending operation performed by the reader in the foregoing method embodiment. For specific related descriptions, refer to the related descriptions in the foregoing embodiments. Details are not described herein again.

The terms "system" and "network" may be used interchangeably in embodiments of this application. "A plurality of" means two or more. "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A communication method, wherein the method is applied to a first communication apparatus, and the method comprises:
sending first identification information of the first communication apparatus, wherein a value of a counter of the first communication apparatus is 0;
receiving a first message, wherein the first message comprises first information and second information, the first information indicates that the first identification information of the first communication apparatus has been correctly received, the second information is used to subtract 1 from values of counters of one or more communication apparatuses, and the values of the counters of the one or more communication apparatuses are greater than 0; and
sending a second message, wherein the second message comprises second identification information of the first communication apparatus.

2. The method according to claim 1, wherein the method further comprises:
determining, based on the first message, to delay sending the second message; and
determining start time of the second message based on a first delay offset.

3. The method according to claim 2, wherein determining the start time of the second message based on the first delay offset comprises:
determining the start time of the second message based on end time of the first message, first duration, and the first delay offset, wherein the first duration is predefined or preconfigured.

4. The method according to claim 2 or 3, wherein determining, based on the first message, to delay sending the second message comprises:
if the first information in the first message is after the second information in time domain, determining to delay sending the second message.

5. The method according to any one of claims 2 to 4, wherein the first delay offset is determined based on at least one of:
a length of the first identification information, a length of a preamble, a length of a postamble, a configured code rate, a configured coverage level, and a configured link rate.

6. The method according to claim 1, wherein the method further comprises:
determining start time of the second message based on end time of the first message and first duration, wherein the first duration is predefined or preconfigured.

7. The method according to claim 6, wherein the method further comprises:
determining that the first information in the first message is located before the second information in time domain.

8. A communication method, wherein the method is applied to a second communication apparatus, and the method comprises:
receiving a first message, wherein the first message comprises first information and second information, the first information indicates that first identification information of the first communication apparatus has been correctly received, the second information is used to subtract 1 from values of counters of one or more communication apparatuses, the values of the counters of the one or more communication apparatuses are greater than 0, and the one or more communication apparatuses comprise the second communication apparatus; and
if a value of a counter of the second communication apparatus is decreased to 0, sending a third message, wherein the third message comprises first identification information of the second communication apparatus.

9. The method according to claim 8, wherein the method further comprises:
determining, based on the first message, to delay sending the third message; and
determining start time of the third message based on a second delay offset.

10. The method according to claim 9, wherein determining the start time of the third message based on the second delay offset comprises:
determining the start time of the third message based on end time of the first message, first duration, and the second delay offset, wherein the first duration is predefined or preconfigured.

11. The method according to claim 9 or 10, wherein determining, based on the first message, to delay sending the second message comprises:
if the first information in the first message is located before the second information in time domain, determining to delay sending the third message.

12. The method according to any one of claims 9 to 11, wherein the second delay offset is determined based on at least one of:
a length of second identification information of the first communication apparatus, a length of a preamble, a length of a postamble, a configured code rate, a configured coverage level, and a configured link rate.

13. The method according to claim 8, wherein the method further comprises:
determining start time of the third message based on end time of the first message and first duration, wherein the first duration is predefined or preconfigured.

14. The method according to claim 13, wherein the method further comprises:
determining that the first information in the first message is located after the second information in time domain.

15. A communication method, wherein the method is applied to a third communication apparatus, and the method comprises:
receiving first identification information of a first communication apparatus, wherein a value of a counter of the first communication apparatus is 0;
sending a first message, wherein the first message comprises first information and second information, the first information indicates that the first identification information of the first communication apparatus has been correctly received, the second information is used to subtract 1 from values of counters of one or more communication apparatuses, the values of the counters of the one or more communication apparatuses are greater than 0, and the one or more communication apparatuses comprise a second communication apparatus;
receiving a second message, wherein the second message comprises second identification information of the first communication apparatus; and
receiving a third message, wherein the third message comprises first identification information of the second communication apparatus, and a value of a counter of the second communication apparatus is decreased to 0, wherein
the second message and the third message do not overlap in time domain.

16. The method according to claim 15, wherein the method further comprises:
determining, based on the first message, to delay receiving the second message; and
determining start time of the second message based on a first delay offset.

17. The method according to claim 16, wherein determining the start time of the second message based on the first delay offset comprises:
determining the start time of the second message based on end time of the first message, first duration, and the first delay offset, wherein the first duration is predefined or preconfigured.

18. The method according to claim 16 or 17, wherein determining, based on the first message, to delay receiving the second message comprises:
if the first information in the first message is after the second information in time domain, determining to delay receiving the second message.

19. The method according to any one of claims 15 to 18, wherein the method further comprises:
determining start time of the third message based on the end time of the first message and the first duration, wherein the first duration is predefined or preconfigured.

20. The method according to claim 15, wherein the method further comprises:
determining, based on the first message, to delay receiving the third message; and
determining start time of the third message based on a second delay offset.

21. The method according to claim 20, wherein determining the start time of the third message based on the second delay offset comprises:
determining the start time of the third message based on end time of the first message, first duration, and the second delay offset, wherein the first duration is predefined or preconfigured.

22. The method according to claim 20 or 21, wherein determining, based on the first message, to delay receiving the second message comprises:
if the first information in the first message is located before the second information in time domain, determining to delay receiving the third message.

23. The method according to any one of claims 20 to 22, wherein the method further comprises:
determining start time of the second message based on the end time of the first message and the first duration, wherein the first duration is predefined or preconfigured.

24. A communication apparatus, comprising a processor, wherein the processor is coupled to a memory, the memory stores a computer program, and the processor is configured to invoke the computer program in the memory, so that the communication apparatus performs the method according to any one of claims 1 to 7, or the method according to any one of claims 8 to 14, or the method according to any one of claims 15 to 23.

25. A communication system, wherein the communication system comprises a first communication apparatus, a second communication apparatus, and a third communication apparatus, wherein the first communication apparatus is configured to perform the method according to any one of claims 1 to 7, the second communication apparatus is configured to perform the method according to any one of claims 8 to 14, and the third communication apparatus is configured to perform the method according to any one of claims 15 to 23.

26. A computer-readable storage medium, wherein the storage medium stores a computer program or instructions, and when the computer program or the instructions are executed by a computer, the method according to any one of claims 1 to 7 is performed, or the method according to any one of claims 8 to 14 is performed, or the method according to any one of claims 15 to 23 is performed.

27. A computer program product, wherein when a computer reads and executes the computer program product, the method according to any one of claims 1 to 7 is performed, or the method according to any one of claims 8 to 14 is performed, or the method according to any one of claims 15 to 23 is performed.
